(19) Europäisches Patentamt
European Patent Office
Office européen des brevets

(11) **EP 2 153 733 B1**

(12) **FASCICULE DE BREVET EUROPEEN**

(45) Date de publication et mention
de la délivrance du brevet:
**05.01.2011 Bulletin 2011/01**

(51) Int Cl.:
*A23L 1/01* (2006.01)   *A23B 4/30* (2006.01)
*A23L 3/10* (2006.01)   *A47J 27/20* (2006.01)

(21) Numéro de dépôt: **09165997.9**

(22) Date de dépôt: **21.07.2009**

(54) **Procédé de cuisson et de refroidissement de produits alimentaires, et installation pour la mise en oeuvre dudit procédé**

Verfahren zur Garung und Kühlung von Lebensmittel und Anlage

Process for cooking and cooling foods and installation

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **23.07.2008 FR 0855013**

(43) Date de publication de la demande:
**17.02.2010 Bulletin 2010/07**

(73) Titulaire: **Armor Inox**
**56430 Mauron (FR)**

(72) Inventeurs:
• **Cadoret, Bernard**
**56430, MAURON (FR)**
• **Marquet, Olivier**
**56430, MAURON (FR)**

(74) Mandataire: **Maillet, Alain**
**Cabinet Le Guen Maillet**
**5 Place Newquay**
**B.P. 70250**
**35802 Dinard Cedex (FR)**

(56) Documents cités:
**EP-A- 1 510 132    EP-A- 1 688 071
EP-A- 1 747 729    US-A- 3 796 144
US-A- 5 280 748**

**Description**

La présente invention concerne un procédé de cuisson et de refroidissement de produits alimentaires. Elle trouve application dans le domaine du traitement industriel des produits alimentaires, du type viandes cuites et, en particulier, du type barres ou pièces de jambon. L'invention concerne également une installation de cuisson et de refroidissement permettant la mise en oeuvre d'un tel procédé de cuisson.

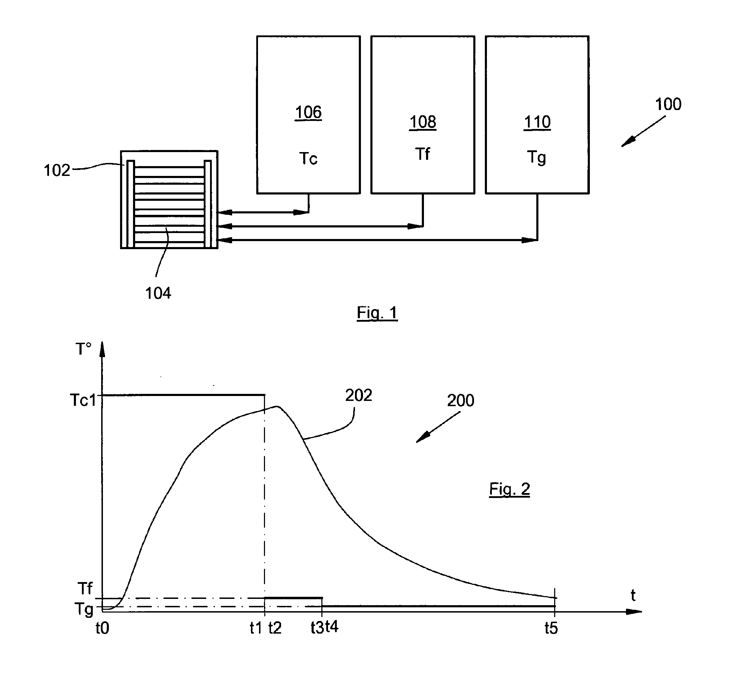

La Fig. 1 représente une installation de cuisson et de refroidissement 100 de l'état de la technique. L'installation de cuisson et de refroidissement 100 comprend une cuve 102 à l'intérieur de laquelle sont disposés des moules 104 contenant des barres de viande devant être cuites. L'installation de cuisson et de refroidissement 100 comprend également un réservoir d'eau chaude 106, un réservoir d'eau froide 108 et un réservoir de saumure ou d'eau glacée 110.

On entend par "moules", tout dispositif pouvant supporter des produits alimentaires. Il peut s'agir d'étagères, de grilles, de paniers empilables, d'unités de moulage, etc.

L'eau chaude est à une température Tc, qui est généralement de l'ordre de 85°C.

L'eau froide est à une température Tf, qui est généralement de l'ordre de 5°C.

Le choix entre la saumure et l'eau glacée dépend du mode opératoire mis en oeuvre dans l'installation de cuisson et de refroidissement 100. La saumure et l'eau glacée sont à une température de Tg, qui est généralement de l'ordre de 0°C pour l'eau et de -8°C pour la saumure.

Les différentes températures dépendent du mode opératoire mis en oeuvre dans l'installation de cuisson et de refroidissement 100, mais elles respectent l'inégalité suivante:

$$Tc > Tf > Tg \qquad (1).$$

La cuve 102 et les réservoirs 106, 108 et 110 sont reliés entre eux par un réseau de tuyauteries, de vannes et de pompes qui permet de remplir la cuve 102 avec de l'eau provenant de l'un de ces réservoirs 106, 108 ou 110 et de la vider de cette eau qui est refoulée dans son réservoir d'origine 106, 108 ou 110.

La Fig. 2 représente un graphe 200 représentatif de la température (T) de l'eau ou de la saumure dans la cuve 102 et de la barre de viande en son coeur en fonction du temps (t). La température de l'eau dans la cuve est représentée par des traits horizontaux et la température au coeur de la barre de viande est représentée par la courbe 202.

La température Tc1 de l'eau chaude dans la cuve 102 est différente de la température Tc de l'eau chaude dans le réservoir 106 du fait de l'absorption d'une partie de l'énergie par les barres de viande et les moules 104. La température Tc1 est de préférence inférieure à la température Tc mais reste supérieure à la température Tf.

Le procédé de cuisson et de refroidissement comprend les étapes:

- d'introduction des moules 104 dans la cuve 102,
- de remplissage, à partir d'un instant t0, de la cuve 102 avec de l'eau chaude à la température Tc,
- de régulation de la température à l'intérieur de la cuve 102 jusqu'à un instant t1,
- de vidange de l'eau chaude de la cuve 102, entre les instants t1 et t2,
- de remplissage, à partir de l'instant t2, de la cuve 102 avec de l'eau froide à la température Tf,
- de régulation de la température à l'intérieur de la cuve 102 jusqu'à un instant t3,
- de vidange de l'eau froide à température Tf de la cuve 102, entre les instants t3 et t4,
- de remplissage, à partir de l'instant t4, de la cuve 102 avec de l'eau glacée ou de la saumure à la température Tg,
- de régulation de la température à l'intérieur de la cuve 102 jusqu'à un instant t5,
- de vidange de l'eau glacée ou de la saumure à température Tg de la cuve 102, après l'instant t5, et
- d'enlèvement des moules de la cuve 102 vidée de son eau ou de sa saumure.

Au cours de l'étape de régulation jusqu'à l'instant t1, la température atteinte par le coeur de la barre de viande est au maximum égale à Tc1, en pratique la température atteinte par le coeur de la barre de viande est inférieure à la température Tc1. Par exemple, dans le cas d'une température Tc de l'ordre de 85°C, la température Tc1 de l'eau dans la cuve 102 est de l'ordre de 70°C et la température du coeur est de l'ordre de 66°C. La régulation de température s'effectue par circulation d'eau entre la cuve 102 et le réservoir d'eau chaude 106 où un dispositif de maintien de température régule la température de l'eau chaude à la température Tc. La vidange de l'eau chaude de la cuve 102 s'effectue par refoulement de l'eau vers son réservoir d'origine 106.

Au cours de l'étape de régulation jusqu'à l'instant t3, la température atteinte par le coeur de la barre de viande est au minimum égale à Tf, en pratique la température Tf n'est jamais atteinte par le coeur de la barre de viande. La régulation de température s'effectue par circulation d'eau entre la cuve 102 et le réservoir d'eau froide 108 où un dispositif de maintien de température régule la température de l'eau froide à la température Tf. La vidange de l'eau froide à température Tf de la cuve 102 s'effectue par refoulement de l'eau vers son réservoir d'origine 108.

Au cours de l'étape de régulation jusqu'à l'instant t5, la température atteinte par le coeur de la barre de viande est au minimum égale à Tg. La régulation de température s'effectue par circulation d'eau ou de saumure entre la cuve 102 et, respectivement, le réservoir d'eau glacée ou le réservoir de saumure 110, où un dispositif de maintien de température régule la température de l'eau glacée ou de la saumure à la température Tg. La vidange de l'eau glacée ou de la saumure de la cuve 102 s'effectue par refoulement de l'eau glacée ou de la saumure vers le réservoir d'origine 110.

Du fait de l'échelle de temps utilisée pour le graphe 200, l'instant t1 et l'instant t2, d'une part, ainsi que l'instant t3 et l'instant t4, d'autre part, sont ici identiques. Mais une différence existe du fait qu'un temps limité est nécessaire à la vidange et au remplissage complet de la cuve 102.

Un tel procédé de cuisson et refroidissement consomme l'énergie absorbée par les produits. En particulier, de l'énergie est absorbée pour cuire les produits alimentaires et chauffer les moules pendant la phase de cuisson et de l'énergie est absorbée pour refroidir les produits alimentaires et moules pendant la phase de refroidissement.

Un objet de la présente invention est de proposer un procédé de cuisson qui ne présente pas les inconvénients de l'art antérieur, et qui, en particulier, permet d'optimiser le bilan énergétique de l'installation et de réduire significativement les consommations énergétiques.

A cet effet, est proposé un procédé de cuisson et de refroidissement de produits alimentaires dans une cuve comprenant successivement:

- une étape d'introduction de moules contenant les produits alimentaires dans la cuve,
- une première étape d'introduction dans la cuve, d'eau à une température intermédiaire Tr, depuis un réservoir d'eau à température intermédiaire.
- une première étape de mise en circulation de l'eau à température intermédiaire, ainsi introduite, entre la cuve et ledit réservoir d'eau à température intermédiaire,
- une première étape de vidange de la cuve par refoulement de l'eau à température intermédiaire vers le réservoir d'eau à température intermédiaire,
- une étape de remplissage de la cuve depuis un réservoir d'eau chaude avec de l'eau chaude à une température Tc supérieure à la température intermédiaire Tr,
- une étape de régulation de la température de l'eau à l'intérieur de la cuve à une température Tc1, par mise en circulation de l'eau chaude, ainsi introduite, entre la cuve et ledit réservoir d'eau chaude et réchauffement de l'eau chaude, ainsi mise en circulation, dans ledit réservoir d'eau chaude,
- une étape de vidange de la cuve par refoulement de l'eau chaude vers le réservoir d'eau chaude,
- une deuxième étape d'introduction dans la cuve, d'eau à la température intermédiaire Tr depuis ledit réservoir d'eau à température intermédiaire,

- une deuxième étape de mise en circulation de l'eau à température intermédiaire, ainsi introduite, entre la cuve et ledit réservoir d'eau à température intermédiaire,
- une deuxième étape de vidange de la cuve par refoulement de l'eau à température intermédiaire vers le réservoir d'eau à température intermédiaire,
- une étape de remplissage de la cuve depuis un réservoir d'eau glacée ou de saumure avec de l'eau glacée ou de la saumure à une température Tg inférieure à la température intermédiaire Tr,
- une étape de régulation de la température de l'eau à l'intérieur de la cuve à la température Tg, par mise en circulation de l'eau glacée ou de la saumure, ainsi introduite, entre la cuve et ledit réservoir d'eau glacée ou de saumure et refroidissement de l'eau glacée ou de la saumure, ainsi mise en circulation, dans ledit réservoir d'eau glacée ou de saumure,
- une étape de vidange de la cuve par refoulement de l'eau glacée ou de la saumure vers le réservoir d'eau glacée ou de saumure, et
- une étape d'enlèvement des moules de la cuve vidée de son eau ou de sa saumure.

Avantageusement, lorsqu'il existe au moins une autre cuve dans laquelle est mis en oeuvre le même procédé de cuisson et de refroidissement, la première étape de mise en circulation sur le réservoir à température intermédiaire pour ladite cuve est mise en oeuvre de manière synchronisée avec la deuxième étape de mise en circulation sur le réservoir à température intermédiaire pour l'une des autres cuves, et la deuxième étape de mise en circulation sur le réservoir à température intermédiaire pour ladite cuve est mise en oeuvre de manière synchronisée avec la première étape de mise en circulation sur le réservoir à température intermédiaire pour l'une des autres cuves.

Avantageusement, le procédé de cuisson et de refroidissement comprend entre la deuxième étape de vidange de l'eau à température intermédiaire et l'étape de remplissage avec de l'eau glacée ou de la saumure:

- une étape de remplissage de la cuve depuis un réservoir d'eau froide avec de l'eau froide à une température Tf comprise entre les températures Tg et Tr,
- une étape de régulation de la température de l'eau à l'intérieur de la cuve à la température Tf, par mise en circulation de l'eau froide, ainsi introduite, entre la cuve et ledit réservoir d'eau froide et refroidissement de l'eau froide, ainsi mise en circulation, dans ledit réservoir d'eau froide, et
- une étape de vidange de la cuve par refoulement de l'eau froide vers le réservoir d'eau froide.

Avantageusement, les étapes d'introduction d'eau à température intermédiaire dans la cuve, s'effectuent par aspersion.

L'invention propose également une installation de cuisson et de refroidissement pour produits alimentaires comprenant:

- une cuve destinée à contenir des moules contenant lesdits produits alimentaires,
- un réservoir d'eau à température intermédiaire à une température Tr,
- un réservoir d'eau chaude comprenant un dispositif de maintien de la température de l'eau à une température Tc supérieure à la température Tr,
- un réservoir d'eau glacée ou de saumure comprenant un dispositif de maintien de la température de l'eau ou de la saumure à une température Tg inférieure à la température Tr,
- un réseau de tuyauteries reliant la cuve et les réservoirs et un ensemble de vannes et de pompes commandant le remplissage de la cuve (102) avec de l'eau provenant de l'un des réservoirs, la mise en circulation de l'eau entre la cuve et son réservoir d'origine et la vidange de cette eau par refoulement dans son réservoir d'origine.

Avantageusement, l'installation de cuisson et de refroidissement comprend au moins une autre cuve destinée à contenir des moules contenant lesdits produits alimentaires et, pour chaque autre cuve, un deuxième ensemble de vannes et de pompes commandant le remplissage de ladite autre cuve avec de l'eau provenant de l'un des réservoirs, la mise en circulation de l'eau entre ladite autre cuve et son réservoir d'origine et la vidange de cette eau par refoulement dans son réservoir d'origine.

Avantageusement, l'installation de cuisson et de refroidissement comprend un réservoir d'eau froide comprenant un dispositif de maintien de la température de l'eau à une température Tf comprise entre les températures Tg et Tr.

Avantageusement, la tuyauterie reliant le réservoir d'eau à température intermédiaire et la cuve débouche, dans ladite cuve, au-dessus des moules par l'intermédiaire d'une rampe d'aspersion.

Avantageusement, la cuve comprend un système de ventilation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente une installation de cuisson et de refroidissement de l'état de la technique,
la Fig. 2 est un graphe représentatif des variations de température en fonction du temps dans l'installation de cuisson et de refroidissement de l'état de la technique,
la Fig. 3 représente une installation de cuisson et de refroidissement selon l'invention, et
la Fig. 4 est un graphe représentatif des variations de température en fonction du temps dans l'installation de cuisson et de refroidissement selon l'invention.

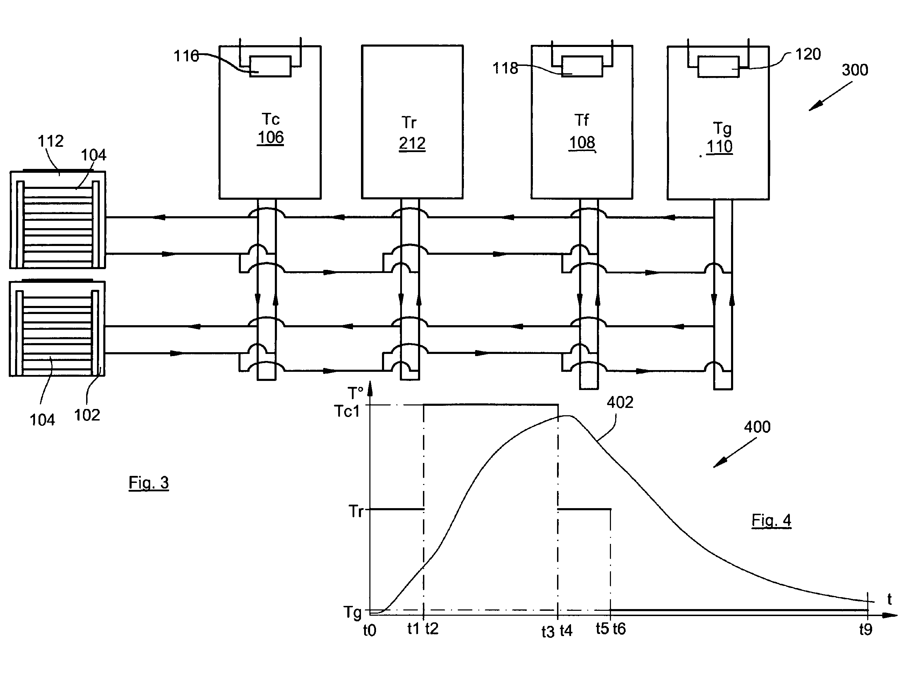

La Fig. 3 représente une installation de cuisson et de refroidissement 300 selon l'invention. L'installation de cuisson et de refroidissement 300 comprend, comme pour l'installation de l'état de la technique, une cuve 102 à l'intérieur de laquelle des moules 104 contenant des produits alimentaires, comme par exemple des barres de viande devant être cuites sont disposées, un réservoir d'eau chaude 106 comprenant un dispositif 116 de maintien de la température de l'eau à une température Tc, un réservoir d'eau froide 108 comprenant un dispositif 118 de maintien de la température de l'eau à une température Tf et un réservoir de saumure ou d'eau glacée 110 comprenant un dispositif 120 de maintien de la température de l'eau ou de la saumure à une température Tg. L'installation de cuisson et de refroidissement 300 comprend également un réservoir d'eau à température intermédiaire 212. La cuve 102 est de préférence fermée pour éviter les déperditions d'énergie.

L'eau chaude est à une température Tc, qui est généralement de l'ordre de 85°C.

L'eau froide est à une température Tf, qui est généralement de l'ordre de 5°C.

La saumure et l'eau glacée sont à une température de Tg, qui est généralement de l'ordre de 0°C pour l'eau et de -8°C pour la saumure.

L'eau à température intermédiaire est à une température Tr, qui est de l'ordre de 40°C.

Les différentes températures dépendent du mode opératoire mis en oeuvre dans l'installation de cuisson et de refroidissement 300, mais elles respectent l'inégalité suivante:

$$ Tc > Tr > Tf > Tg \qquad (2). $$

La cuve 102 et les réservoirs 106, 108, 110 et 212 sont reliés entre eux par un réseau de tuyauteries reliant la cuve 102 et les réservoirs 106, 108, 110 et 212 et un ensemble de vannes et de pompes permettant de commander l'ouverture ou la fermeture de chaque tuyauterie et donc le remplissage de la cuve 102 avec de l'eau provenant de l'un de ces réservoirs 106, 108, 110 ou 212, la mise en circulation de l'eau entre la cuve 102 et son réservoir d'origine 106, 108, 110 ou 212, et la vidange de cette eau par refoulement dans son réservoir d'origine 106, 108, 110 ou 212.

Les flèches indiquent le sens de déplacement de l'eau dans les tuyauteries. Les vannes et les pompes ne sont pas représentées mais l'homme du métier sait mettre en oeuvre de tels éléments de manière à permettre la mise en circulation de l'eau.

Le dispositif 116 de maintien de la température de l'eau à la température Tc est, par exemple du type dispositif de chauffage. Le dispositif 118 de maintien de la température de l'eau à la température Tf et le dispositif 120 de maintien de la température de l'eau ou de la saumure à la température Tg sont, par exemple, du type échangeur.

Dans un mode de réalisation particulier de l'invention, le réservoir d'eau froide 108 n'est pas utilisé.

La Fig. 4 représente un graphe 400 représentatif de la température (T) de l'eau ou de la saumure dans la cuve 102 et de la barre de viande en son coeur en fonction du temps t. La température de l'eau dans la cuve 102 est représentée par des traits continus épais et la température au coeur de la barre de viande est représentée par la courbe 402. Comme précédemment, la température Tc1 de l'eau chaude dans la cuve 102 est inférieure à la température Tc de l'eau chaude dans le réservoir 106 mais reste supérieure à la température Tr. Par exemple, la température Tc1 est de l'ordre de 70°C pour une température Tc de l'ordre de 85°C.

Le procédé de cuisson et de refroidissement selon l'invention comprend successivement:

- une étape d'introduction de moules 104 contenant les produits alimentaires dans la cuve 102,

- une première étape d'introduction dans la cuve 102, d'eau à la température intermédiaire Tr, depuis le réservoir d'eau à température intermédiaire 212,

- une première étape de mise en circulation de l'eau à température intermédiaire, ainsi introduite, entre la cuve 102 et le réservoir d'eau à température intermédiaire 212,

- une première étape de vidange de la cuve 102 par refoulement de l'eau à température intermédiaire vers le réservoir d'eau à température intermédiaire 212,

- une étape de remplissage de la cuve 102 depuis le réservoir d'eau chaude 106 avec de l'eau chaude à la température Tc,

- une étape de régulation de la température de l'eau à l'intérieur de la cuve 102 à la température Tc1, par mise en circulation de l'eau chaude, ainsi introduite, entre la cuve 102 et le réservoir d'eau chaude 106 et réchauffement de l'eau chaude, ainsi mise en circulation, dans ledit réservoir d'eau chaude 106,

- une étape de vidange de la cuve 102 par refoulement de l'eau chaude vers le réservoir d'eau chaude 106,

- une deuxième étape d'introduction dans la cuve 102, d'eau à la température intermédiaire Tr depuis le réservoir d'eau à température intermédiaire 212,

- une deuxième étape de mise en circulation de l'eau à température intermédiaire, ainsi introduite, entre la cuve 102 et le réservoir d'eau à température intermédiaire 212,

- une deuxième étape de vidange de la cuve 102 par refoulement de l'eau à température intermédiaire vers le réservoir d'eau à température intermédiaire 212,

- une étape de remplissage de la cuve 102 depuis le réservoir d'eau glacée ou de saumure 110 avec de l'eau glacée ou de la saumure à la température Tg,

- une étape de régulation de la température de l'eau à l'intérieur de la cuve 102 à la température Tg, par mise en circulation de l'eau glacée ou de la saumure, ainsi introduite, entre la cuve 102 et le réservoir d'eau glacée ou de saumure 110 et refroidissement de l'eau glacée ou de la saumure, ainsi mise en circulation, dans le réservoir d'eau glacée ou de saumure 110,

- une étape de vidange de la cuve 102 par refoulement de l'eau glacée ou de la saumure vers le réservoir d'eau glacée ou de saumure 110, et

- une étape d'enlèvement des moules de la cuve 102 vidée de son eau ou de sa saumure.

Bien sûr, chaque étape de régulation n'est mise en oeuvre que lorsque la température de l'eau dans la cuve 102 s'écarte de la température Tc1, Tg de référence. Par exemple, dans le cas de l'eau chaude, le maintien de la température à la valeur Tc1 est mis en oeuvre lorsque la température de l'eau dans la cuve 102 est trop basse par rapport à Tc1. L'eau chaude est alors mise en circulation. Si la température à l'intérieur de la cuve 102 est supérieure ou égale à la température Tc1, aucune mise en circulation n'est mise en oeuvre. Par contre, il est possible d'activer la pompe dans la cuve 102 et d'ouvrir les vannes appropriées afin de brasser l'eau chaude de la cuve 102.

La première étape d'introduction de l'eau à température intermédiaire Tr est réalisée à un instant t0.

La première étape de mise en circulation de l'eau à température intermédiaire Tr est effectuée entre l'instant t0 et un instant t1.

La première étape de vidange de l'eau à température intermédiaire Tr est effectuée entre l'instant t1 et un instant t2.

L'étape de remplissage de la cuve 102 avec de l'eau chaude est réalisée à l'instant t2.

L'étape de régulation à la température Tc1 est effectuée ente l'instant t2 et un instant t3.

L'étape de vidange de l'eau chaude est effectuée entre l'instant t3 et un instant t4.

La deuxième étape d'introduction de l'eau à température intermédiaire Tr est réalisée à l'instant t4.

La deuxième étape de mise en circulation de l'eau à température intermédiaire Tr est effectuée entre l'instant t4 et un instant t5.

La deuxième étape de vidange de l'eau à température intermédiaire Tr est effectuée entre l'instant t5 et un instant t6.

L'étape de remplissage de la cuve 102 avec de l'eau glacée ou de la saumure est réalisée à l'instant t6.

L'étape de régulation à la température Tg est effectuée ente l'instant t6 et un instant t9.

L'étape de vidange de l'eau glacée ou de la saumure est effectuée à l'instant t9.

Dans un mode de réalisation de l'invention, dans lequel le réservoir d'eau froide 108 et l'eau à la température Tf sont utilisés, le procédé de cuisson et de refroidissement comprend entre la deuxième étape de vidange de l'eau à température intermédiaire et l'étape de remplissage avec de l'eau glacée ou de la saumure:

- une étape de remplissage de la cuve 102 depuis le réservoir d'eau froide 108 avec de l'eau froide à la température Tf,
- une étape de régulation de la température de l'eau à l'intérieur de la cuve 102 à la température Tf, par mise en circulation de l'eau froide, ainsi introduite, entre la cuve 102 et le réservoir d'eau froide 108 et refroidissement de l'eau froide, ainsi mise en circulation, dans le réservoir d'eau froide 108, et
- une étape de vidange de la cuve 102 par refoulement de l'eau froide vers le réservoir d'eau froide 108.

Chaque étape de régulation à une température donnée dans la cuve 102 entraîne une consommation énergétique nécessaire au fonctionnement du dispositif de maintien de température 116, 118, 120 concerné pour maintenir la température considérée dans le réservoir 106, 108, 110 considéré. Les étapes de régulation s'entendent comme des étapes au cours desquelles la température à coeur des barres de viande augmente ou baisse ou est constante en fonction du mode de régulation souhaité.

Par contre, le réservoir d'eau à température intermédiaire 212 ne comporte aucun dispositif de maintien de température, c'est l'utilisation du même réservoir et de la même eau lors de la première étape de mise en circulation sur le réservoir 212 à température intermédiaire Tr et de la deuxième étape de mise en circulation sur le réservoir 212 à température intermédiaire Tr qui permet une économie d'énergie. En effet, lors de la première étape de mise en circulation, l'eau a sa température qui diminue du fait du réchauffement des produits alimentaires. Cette baisse de température de l'eau dans le réservoir d'eau à température intermédiaire 212 est compensée par une augmentation de la température de l'eau lors de la deuxième étape de mise en circulation. En effet, lors de la deuxième étape de mise en circulation, l'eau a sa température qui augmente du fait du refroidissement des produits alimentaires et des moules.

Ainsi, il n'est pas nécessaire de réguler la température de l'eau à la température intermédiaire Tr en utilisant un dispositif de maintien de température.

En d'autres termes, l'énergie absorbée par les produits alimentaires et moules pendant la première étape de mise en circulation, et l'énergie dissipée par les produits alimentaires et des moules pendant la deuxième étape de mise en circulation, n'intervient pas dans le bilan énergétique du procédé. L'énergie dissipée pendant la deuxième étape de mise en circulation sur le réservoir 212 à température intermédiaire Tr chauffe l'eau qui chauffe les produits alimentaires et des moules pendant la première étape de mise en circulation sur le réservoir 212 à température intermédiaire Tr, et, inversement, l'énergie absorbée pendant la première étape de mise en circulation sur le réservoir 212 à température intermédiaire Tr entraîne un refroidissement de l'eau qui refroidit les produits alimentaires pendant la deuxième étape de mise en circulation sur le réservoir 212 à température intermédiaire Tr. L'économie d'énergie sur un cycle complet du procédé de cuisson et de refroidissement est de l'ordre de 38% lorsque chaque étape de mise en circulation dure environ 1 heure.

Les variations de température de l'eau dans le réservoir d'eau à température intermédiaire 212 décrites précédemment ne sont pas observées sur la Fig. 4, car cette dernière est représentative d'un mode de réalisation avantageux dans lequel l'installation 300 comprend au moins une autre cuve 112 dans laquelle est mis en oeuvre le même procédé de cuisson et de refroidissement selon l'invention. Lesdites autres cuves 112 sont également destinées à contenir des moules 104 contenant les produits alimentaires et l'installation 300 comprend également, pour chaque autre cuve 112 un deuxième ensemble de vannes et de pompes commandant le remplissage de ladite autre cuve 112 avec de l'eau provenant de l'un des réservoirs 106, 108, 110 ou 212, la mise en circulation de l'eau entre ladite autre cuve 112 et son réservoir d'origine 106, 108, 110 ou 212 et la vidange de cette eau par refoulement dans son réservoir d'origine 106, 108, 110 ou 212. Lesdites autres cuves 112 sont reliées au même réseau de tuyauterie que la cuve 102.

Dans ce mode de réalisation de l'invention, la première étape de mise en circulation sur le réservoir 212 à température intermédiaire Tr pour la cuve 102 est mise en oeuvre de manière synchronisée avec la deuxième étape de mise en circulation sur le réservoir 212 à température intermédiaire Tr pour l'une des autres cuves 112, la deuxième étape de mise en circulation sur le réservoir 212 à température intermédiaire Tr pour la cuve 102 est mise en oeuvre de manière synchronisée avec la première étape de mise en circulation sur le réservoir 212 à température intermédiaire Tr pour l'une des autres cuves 112.

Ainsi, il se crée un équilibre naturel au niveau d'une température cible de la température du stockage Tr. L'eau à température intermédiaire provenant de ladite autre cuve 112 vient réchauffer l'eau du réservoir d'eau à température intermédiaire 212 tandis que l'eau à température intermédiaire provenant de ladite cuve 102 vient la refroidir.

Ainsi, comme précédemment, le procédé selon l'invention ne nécessite pas d'étape de régulation de température par un dispositif de maintien de température du type échangeur de chaleur.

Bien sûr, il est possible et avantageux de combiner plus de deux cuves 102, 112.

On dit que la première étape de mise en circulation pour la cuve 102 est synchronisée avec la deuxième étape de mise en circulation, si elles ont lieu simultanément ou si elles sont légèrement décalées l'une par rapport à l'autre sans perturber notablement l'échange thermique.

Si une instabilité trop importante de la température Tr est observée, compte tenu de la plage de température dans laquelle elle se situe, il est toujours possible d'installer un échangeur de taille réduite dont les coûts de fonctionnement sont faibles.

Les instants t1 et t2, t3 et t4, t5 et t6 sont ici représentés aux mêmes points à cause de l'échelle mais ils sont en réalité tous différents. En effet, un cycle complet du procédé de l'invention dure entre 8 et 24 heures tandis que la vidange et le remplissage de la cuve 102 durent environ 15 minutes.

Comme cela a été expliqué ci-dessus, il n'est ainsi pas nécessaire de mettre en oeuvre un dispositif de maintien de température régulant la température de l'eau à température intermédiaire dans le réservoir d'eau à température intermédiaire 212.

Selon un mode de réalisation particulier de l'invention, les étapes d'introduction d'eau à température intermédiaire dans la cuve 102 constituent des remplissages qui s'effectuent par écoulement à travers de la tuyauterie reliant le réservoir 212 et la cuve 102.

Selon un autre mode de réalisation particulier de l'invention, les étapes d'introduction d'eau à température intermédiaire dans la cuve 102, s'effectuent par aspersion des moules 104 et des barres de viande. A cette fin, la tuyauterie reliant le réservoir d'eau à température intermédiaire 212 et la cuve 102 débouche, dans ladite cuve 102, au-dessus des moules 104 par l'intermédiaire d'une rampe d'aspersion ou de brumisation.

Dans ce dernier mode de réalisation, un système de ventilation peut être mis en place dans la cuve 102. Ce système de ventilation optimise la dispersion de calories en exploitant l'énergie liée à la vaporisation de l'eau.

## Revendications

**1.** Procédé de cuisson et de refroidissement de produits alimentaires dans une cuve (102) comprenant successivement:

- une étape d'introduction de moules (104) contenant les produits alimentaires dans la cuve (102),
- une première étape d'introduction dans la cuve (102), d'eau à une température intermédiaire Tr, depuis un réservoir d'eau à température intermédiaire (212),
- une première étape de mise en circulation de l'eau à température intermédiaire, ainsi introduite, entre la cuve (102) et ledit réservoir d'eau à température intermédiaire (212),
- une première étape de vidange de la cuve (102) par refoulement de l'eau à température intermédiaire vers le réservoir d'eau à température intermédiaire (212),
- une étape de remplissage de la cuve (102) depuis un réservoir d'eau chaude (106) avec de l'eau chaude à une température Tc supérieure à la température intermédiaire Tr,
- une étape de régulation de la température de l'eau à l'intérieur de la cuve (102) à une température Tc1, par mise en circulation de l'eau chaude, ainsi introduite, entre la cuve (102) et ledit réservoir d'eau chaude (106) et réchauffement de l'eau chaude, ainsi mise en circulation, dans ledit réservoir d'eau chaude (106),
- une étape de vidange de la cuve (102) par refoulement de l'eau chaude vers le réservoir d'eau chaude (106),
- une deuxième étape d'introduction dans la cuve (102), d'eau à la température intermédiaire Tr depuis ledit réservoir d'eau à température intermédiaire (212),
- une deuxième étape de mise en circulation de l'eau à température intermédiaire, ainsi introduite, entre la cuve (102) et ledit réservoir d'eau à température intermédiaire (212),
- une deuxième étape de vidange de la cuve (102) par refoulement de l'eau à température intermédiaire vers le réservoir d'eau à température intermédiaire (212),
- une étape de remplissage de la cuve (102) depuis un réservoir d'eau glacée ou de saumure (110) avec de l'eau glacée ou de la saumure à une température Tg inférieure à la température intermédiaire Tr,
- une étape de régulation de la température de l'eau à l'intérieur de la cuve (102) à la température Tg, par mise en circulation de l'eau glacée ou de la saumure, ainsi introduite, entre la cuve (102) et ledit réservoir d'eau glacée ou de saumure (110) et refroidissement de l'eau glacée ou de la saumure, ainsi mise en circulation, dans ledit réservoir d'eau glacée ou de saumure (110),
- une étape de vidange de la cuve (102) par refoulement de l'eau glacée ou de la saumure vers le réservoir d'eau glacée ou de saumure (110), et
- une étape d'enlèvement des moules de la cuve (102) vidée de son eau ou de sa saumure.

**2.** Procédé de cuisson et de refroidissement selon la revendication 1, **caractérisé en ce que** lorsqu'il existe au moins une autre cuve (112) dans laquelle est mis en oeuvre le même procédé de cuisson et de refroidissement, la première étape de mise en circulation sur ledit réservoir à température intermédiaire (212) pour ladite cuve (102) est mise en oeuvre de manière synchronisée avec la deuxième étape de mise en circulation sur ledit réservoir à température intermédiaire (212) pour l'une des autres cuves (112), et la deuxième étape de mise en circulation sur ledit réservoir à température intermédiaire (212) pour ladite cuve (102) est mise en oeuvre de manière synchronisée avec la première étape de mise en circulation sur ledit réservoir à température intermédiaire (212) pour l'une des autres cuves (112).

3. Procédé de cuisson et de refroidissement selon l'une des revendications 1 ou 2, **caractérisé en ce qu'**il comprend entre la deuxième étape de vidange de l'eau à température intermédiaire et l'étape de remplissage avec de l'eau glacée ou de la saumure:

   - une étape de remplissage de la cuve (102) depuis un réservoir d'eau froide (108) avec de l'eau froide à une température Tf comprise entre les températures Tg et Tr,
   - une étape de régulation de la température de l'eau à l'intérieur de la cuve (102) à la température Tf, par mise en circulation de l'eau froide, ainsi introduite, entre la cuve (102) et ledit réservoir d'eau froide (108) et refroidissement de l'eau froide, ainsi mise en circulation, dans ledit réservoir d'eau froide (108), et
   - une étape de vidange de la cuve (102) par refoulement de l'eau froide vers le réservoir d'eau froide (108).

4. Procédé de cuisson et de refroidissement selon l'une des revendications 1 à 3, **caractérisé en ce que** les étapes d'introduction d'eau à température intermédiaire dans la cuve (102), s'effectuent par aspersion.

5. Installation de cuisson et de refroidissement (300) pour produits alimentaires comprenant:

   - une cuve (102) destinée à contenir des moules (104) contenant lesdits produits alimentaires,
   - un réservoir d'eau à température intermédiaire (212) à une température Tr,
   - un réservoir d'eau chaude (106) comprenant un dispositif (116) de maintien de la température de l'eau à une température Tc supérieure à la température Tr,
   - un réservoir d'eau glacée ou de saumure (110) comprenant un dispositif (120) de maintien de la température de l'eau ou de la saumure à une température Tg inférieure à la température Tr,
   - un réseau de tuyauteries reliant la cuve (102) et les réservoirs (106, 110, 212) et un ensemble de vannes et de pompes commandant le remplissage de la cuve (102) avec de l'eau provenant de l'un des réservoirs (106, 110, 212), la mise en circulation de l'eau entre la cuve (102) et son réservoir d'origine (106, 110, 212) et la vidange de cette eau par refoulement dans son réservoir d'origine (106, 110, 212).

6. Installation de cuisson et de refroidissement (300) selon la revendication 5, **caractérisée en ce qu'**elle comprend au moins une autre cuve (112) destinée à contenir des moules (104) contenant lesdits produits alimentaires et, pour chaque autre cuve (112), un deuxième ensemble de vannes et de pompes commandant le remplissage de ladite autre cuve (112) avec de l'eau provenant de l'un des réservoirs (106, 110, 212), la mise en circulation de l'eau entre ladite autre cuve (112) et son réservoir d'origine (106, 110, 212) et la vidange de cette eau par refoulement dans son réservoir d'origine (106, 110, 212).

7. Installation de cuisson et de refroidissement (300) selon l'une des revendications 5 ou 6, **caractérisée en ce qu'**elle comprend un réservoir d'eau froide (108) comprenant un dispositif (118) de maintien de la température de l'eau à une température Tf comprise entre les températures Tg et Tr.

8. Installation de cuisson et de refroidissement (300) selon l'une des revendications 5 à 7, **caractérisée en ce que** la tuyauterie reliant le réservoir d'eau à température intermédiaire (212) et la cuve (102) débouche, dans ladite cuve (102), au-dessus des moules (104) par l'intermédiaire d'une rampe d'aspersion.

9. Installation de cuisson et de refroidissement (300) selon la revendication 8, **caractérisée en ce que** la cuve (102) comprend un système de ventilation.

## Claims

1. Process for cooking and cooling food products in a tank (102) comprising successively:

   - a stage of introducing moulds (104) containing food products into the tank (102),
   - a first stage of introducing water at an intermediate temperature Tr into the tank (102) from a reservoir of water at intermediate temperature (212),
   - a first stage of circulating the water at intermediate temperature thus introduced between the tank (102) and said reservoir of water at intermediate temperature (212),
   - a first stage of emptying the tank (102) by discharging the water at intermediate temperature to the reservoir of water at intermediate temperature (212),
   - a stage of filling the tank (102) from a hot water reservoir (106) with the hot water at a temperature Tc greater than the intermediate temperature Tr,
   - a stage of adjusting the temperature of the water inside the tank (102) to a temperature Tcl by circulating the hot water thus introduced between the tank (102) and said hot water reservoir (106) and heating the hot water thus circulated in said hot water reservoir (106),
- a stage of emptying the tank (102) by discharging the hot water to the hot water reservoir (106),
- a second stage of introducing water at an intermediate temperature Tr into the tank (102) from said reservoir of water at intermediate temperature (212),
- a second stage of circulating the water at intermediate temperature thus introduced between the tank (102) and said reservoir of water at intermediate temperature (212),
- a second stage of emptying the tank (102) by discharging the water at intermediate temperature to the reservoir of water at intermediate temperature (212),
- a stage of filling the tank (102) from a reservoir of ice water or brine (110) with the ice water or brine at a temperature Tg lower than the intermediate temperature Tr,
- a stage of adjusting the temperature of the water inside the tank (102) to a temperature Tg by circulating the ice water or brine thus introduced between the tank (102) and said reservoir of ice water or brine (110) and cooling the ice water or brine thus circulated in said reservoir of ice water or brine (110),
- a stage of emptying the tank (102) by discharging the ice water or brine to the reservoir of ice water or brine (110), and
- a stage of removing the moulds from the tank (102) emptied of its water or brine.

2. Process for cooking and cooling according to claim 1, **characterised in that**, when there is at least one other tank (112) in which the same process for cooking and cooling is implemented, the first stage of circulating on said reservoir at intermediate temperature (212) for said tank (102) is implemented in a synchronised manner with the second stage of circulating on said reservoir at intermediate temperature (212) for one of the other tanks (112) and the second stage of circulating on said reservoir at intermediate temperature (212) for said tank (102) is implemented in a synchronised manner with the first stage of circulating on said reservoir at intermediate temperature (212) for one of the other tanks (112).

3. Process for cooking and cooling according to one of claims 1 or 2, **characterised in that** it comprises, between the second stage of emptying the water at intermediate temperature and the stage of filling with ice water or brine:

- a stage of filling the tank (102) from a cold water reservoir (108) with the cold water at a temperature Tf between temperatures Tg and Tr,
- a stage of adjusting the temperature of the water inside the tank (102) to temperature Tf by circulating the cold water thus introduced between the tank (102) and said cold water reservoir (108) and cooling the cold water thus circulated in said cold water reservoir (108), and
- a stage of emptying the tank (102) by discharging the cold water to the cold water reservoir (108).

4. Process for cooking and cooling according to one of claims 1 to 3, **characterised in that** the stages of introducing water at intermediate temperature into the tank (102) are performed by sprinkling.

5. Cooking and cooling installation (300) for food products comprising:

- a tank (102) intended to contain moulds (104) containing said food products,
- a reservoir of water at intermediate temperature (212) at a temperature Tr,
- a hot water reservoir (106) including a device (116) for maintaining the temperature of the water at a temperature Tc greater than temperature Tr,
- a reservoir of ice water or brine (110) including a device (120) for maintaining the temperature of the water or brine at a temperature Tg lower than temperature Tr,
- a network of piping connecting the tank (102) and the reservoirs (106, 110, 212) and a set of valves and pumps controlling the filling of the tank (102) with water originating from one of the reservoirs (106, 110, 212), circulating the water between the tank (102) and its reservoir of origin (106, 110, 212) and emptying such water by discharging it into its reservoir of origin (106, 110, 212).

6. Cooking and cooling installation (300) according to claim 5, **characterised in that** it comprises at least one other tank (112) intended to contain moulds (104) containing said food products and, for each other tank (112), a second set of valves and pumps controlling the filling of said other tank (112) with water originating from one of the reservoirs (106, 110, 212), circulating the water between said other tank (112) and its reservoir of origin (106, 110, 212) and emptying such water by discharging it into its reservoir of origin (106, 110, 212).

7. Cooking and cooling installation (300) according to one of claims 5 or 6, **characterised in that** it comprises a cold water reservoir (108) including a device (118) for maintaining the temperature of the water at a temperature Tf between temperatures Tg and Tr.

8. Cooking and cooling installation (300) according to one of claims 5 to 7, **characterised in that** the piping connecting the reservoir of water at intermediate temperature (212) and the tank (102) emerges into said tank (102) above the moulds (104) through a sprinkler bar.

9. Cooking and cooling installation (300) according to claim 8, **characterised in that** the tank (102) includes a ventilation system.


**Patentansprüche**

1. Verfahren zum Garen und Abkühlen von Lebensmittelprodukten in einem Tank (102), aufweisend die aufeinander folgenden Schritte:

> - einen Schritt des Einführens von die Lebensmittelprodukte beinhaltenden Formen (104) in den Tank (102),
> - einen ersten Schritt des Zuführens von Wasser einer mittleren Temperatur Tr aus einem Behälter für Wasser mittlerer Temperatur (212) in den Tank (102),
> - einen ersten Schritt, des Umwälzens des zugeführten Wassers mittlerer Temperatur zwischen dem Tank (102) und dem Behälter für Wasser mittlerer Temperatur (212),
> - einen ersten Schritt des Entleerens des Tanks (102) durch Abführen des Wassers mittlerer Temperatur in den Behälter für Wasser mittlerer Temperatur (212),
> - einen Schritt des Füllens des Tanks (102) aus einem Heißwasserbehälter (106) mit heißem Wasser mit einer Temperatur TC, die höher ist als die mittlere Temperatur Tr, aus einem Behälter für heißes Wasser
> - einen Schritt der Regulierung der Temperatur des Wassers im Inneren des Tanks (102) auf eine Temperatur Tc1, indem das zugeführte heiße Wasser zwischen dem Tank (102) und dem Behälter für heißes Wasser (106) umgewälzt versetzt wird und des heiße, umgewälzte Wasser im Behälter für heißes Wasser (106) erhitzt wird,
> - einen Schritt des Entleerens des Tanks (102) durch Abführen des heißen Wassers in den Behälter für heißes Wasser (106),
> - einen zweiten Schritt des Zuführens von Wasser mit mittlerer Temperatur Tr aus dem Behälter für Wasser mittlerer Temperatur (212) in den Tank (102),
> - einen zweiten Schritt, des Umwälzens des zugeführten Wassers mittlerer Temperatur zwischen dem Tank (102) und dem Behälter für Wasser mittlerer Temperatur (212),
> - einen zweiten Schritt des Entleerens des Tanks (102) durch Abführen des Wassers mittlerer Temperatur in den Behälter für Wasser mittlerer Temperatur (212),
> - einen Schritt des Füllens des Tanks (102) mit Eiswasser oder Sole mit einer Temperatur Tg, die kleiner ist als die mittlere Temperatur Tr, aus einem Behälter für Eiswasser oder Sole (110)
> - einen Schritt des Regulierens der Temperatur des Wassers im Inneren des Tanks (102) auf die Temperatur Tg, indem das zugeführte Eiswasser oder die zugeführte Sole zwischen dem Tank (102) und dem Behälter für Eiswasser bzw. Sole (110) umgewälzt wird und das Eiswasser oder die umgewälzte Sole im Behälter für Eiswasser bzw. Sole (110) gekühlt wird,
> - einen Schritt des Entleerens des Tanks (102) durch Abführen des Eiswassers bzw. der Sole in den Behälter für Eiswasser bzw. Sole (110), und
> - einen Schritt der Entnahme der Formen aus dem Tank (102), aus dem das Wasser oder die Sole entleert wurde.

2. Verfahren zum Garen und Abkühlen gemäß Anspruch 1,
**dadurch gekennzeichnet, dass**,
falls mindestens ein weiterer Tank (112) existiert, in dem dasselbe Verfahren zum Garen und Abkühlen angewandt wird, der erste Schritt des Umwälzens über den Behälter für Wasser mittlerer Temperatur (212) für den ersten Tank (102) synchron Schritt des Umwälzens über den Behälter für Wasser mittlerer Temperatur (212) für einen der weiteren Tanks (112) durchgeführt wird, und der zweite Schritt des Umwälzens über den Behälter für Wasser mittlerer Temperatur (212) für den ersten Tank (102) synchron mit dem ersten Schritt des Umwälzens über den Behälter für Wasser mittlerer Temperatur (212) für einen der weiteren Tanks (112) durchgeführt wird.

3. Verfahren zum Garen und Abkühlen gemäß einem der Ansprüche 1 oder 2,
**dadurch gekennzeichnet, dass**
das Verfahren zwischen dem zweiten Schritt des Entleerens des Wassers mit mittlerer Temperatur und dem Schritt des Füllens mit Eiswasser oder mit Sole aufweist:

> - einen Schritt des Füllens des Tanks (102) mit kaltem Wasser mit einer Temperatur Tf, die zwischen den Temperaturen Tg und Tr liegt, aus einem Behälter für kaltes Wasser (108)
> - einen Schritt des Regulierens der Temperatur des Wassers im Inneren des Tanks (102) auf die Temperatur Tf, indem das zugeführte kalte Wasser zwischen dem Tank (102) und dem Kaltwasserbehälter (108) in Zirkulation versetzt wird und das kalte Wasser, folglich in Zirkulation versetzt, im Behälter für kaltes Wasser (108) gekühlt wird, und

- einen Schritt zum Entleeren des Tanks (102) durch Abführen des kalten Wassers in den Kaltwasserbehälter (108).

**4.** Verfahren zum Garen und Abkühlen gemäß einem der Ansprüche 1-3,
**dadurch gekennzeichnet, dass**
die Schritte des Zuführens von Wasser mittlerer Temperatur in den Tank (102) durch Besprengung erfolgen.

**5.** Vorrichtung zum Garen und Abkühlen (300) für Lebensmittelprodukte, aufweisend:

- einen Tank (102), ausgelegt zum Aufnehmen von Formen (104), in denen sich Lebensmittelprodukte befinden;
- einen Behälter für Wasser einer mittleren Temperatur (212) Tr,
- einen Behälter für heißes Wasser (106), mit einer Vorrichtung (116) zum Aufrechterhalten der Wassertemperatur auf einer Temperatur Tc, die höher als die Temperatur Tr ist,
- einen Eiswasser- oder Solebehälter (110), mit einer Vorrichtung (120) zum Aufrechterhalten der Wasser- oder Soletemperaturen auf einer Temperatur Tg, die niedriger als die Temperatur Tr ist,
- ein Rohrnetz, das den Tank (102) mit den Behältern (106, 110, 212) verbindet und einen Satz an Ventilen und Pumpen, die die Befüllung des Tanks (102) mit Wasser aus einem der Behälter (106, 110, 212), das Umwälzen des Wassers zwischen dem Tank (102) und seinem Ursprungsbehälter (106, 110, 212) sowie das Entleeren des Wassers durch Abführen in seinen Ursprungsbehälter (106, 110, 212) steuert.

**6.** Vorrichtung zum Garen und Abkühlen (300) gemäß Anspruch 5,
**dadurch gekennzeichnet, dass**
die Vorrichtung mindestens einen weiteren Tank (112) aufweist, der zur Aufnahme von Formen (104) ausgelegt ist, in denen sich die Lebensmittelprodukte befinden und, für jeden weiteren Tank (112) einen zweiten Satz an Ventilen und Pumpen, die die Befüllung des jeweiligen weiteren Tanks (112) mit Wasser aus einem der Behälter (106, 110, 212), die das Umwälzen des Wassers zwischen dem jeweiligen weiteren Tank (112) und seinem Ursprungsbehälter (106, 110, 212), sowie die Entleerung des Wassers durch Abführen in seinen Ursprungsbehälter (106, 110, 212) steuert.

**7.** Vorrichtung zum Garen und Abkühlen (300) gemäß einem der Ansprüche 5 oder 6,

**dadurch gekennzeichnet, dass**
die Vorrichtung einen Behälter für kaltes Wasser (108) aufweist, mit einer Vorrichtung (118) zum Aufrechterhalten der Wassertemperatur auf einer Temperatur Tf, die zwischen den Temperaturen Tg und Tr liegt.

**8.** Vorrichtung zum Garen und Abkühlen (300) gemäß einem der Ansprüche 5-7,
**dadurch gekennzeichnet, dass**
das Rohrnetz, das den Behälter für Wasser mit mittlerer Temperatur (212) und den Tank (102) verbindet, im Tank (102) über den Formen (104) in eine Sprinklervorrichtung mündet.

**9.** Vorrichtung zum Garen und Abkühlen (300) gemäß Anspruch 8,
**dadurch gekennzeichnet, dass**
der Tank (102) ein Belüftungssystem aufweist.

Fig. 1

Fig. 2

EP 2 153 733 B1

116

Tc
106

Tr
212

118

Tf
108

Tg
110

120

300

112    104

104    102

Fig. 3

T°

Tc1

402

400

Tr

Fig. 4

Tg

t0    t1 t2    t3 t4    t5 t6    t9    t